(19) Europäisches Patentamt
European Patent Office
Office européen des brevets

(11) Numéro de publication: **0 141 780**
**A1**

(12) **DEMANDE DE BREVET EUROPEEN**

(21) Numéro de dépôt: **84810487.3**

(22) Date de dépôt: **08.10.84**

(51) Int. Cl.⁴: **C 02 F 1/46**

(30) Priorité: **11.10.83 CH 5524/83**

(43) Date de publication de la demande: **15.05.85**
**Bulletin 85/20**

(84) Etats contractants désignés: **AT BE CH DE FR GB IT LI LU NL SE**

(71) Demandeur: **BATTELLE MEMORIAL INSTITUTE, 7 route de Drize, CH-1227 Carouge/Genève (CH)**

(72) Inventeur: **Porta, Augusto, 52, route de Drize, CH-1227 Carouge/Genève (CH)**
Inventeur: **Kulhanek, Antonin, 47, avenue du Lignon, CH-1219 Le Lignon (CH)**

(74) Mandataire: **Dousse, Blasco et al, 7, route de Drize, CH-1227 Carouge/Genève (CH)**

(54) **Procédé pour la décontamination électrochimique de l'eau.**

(57) On fait passer l'eau à dépolluer dans une cellule contenant une cathode poreuse en présence d'oxygène. Celui-ci est réduit au contact de la cathode et les produits d'électroréduction agissent comme agents dépolluants de l'eau.

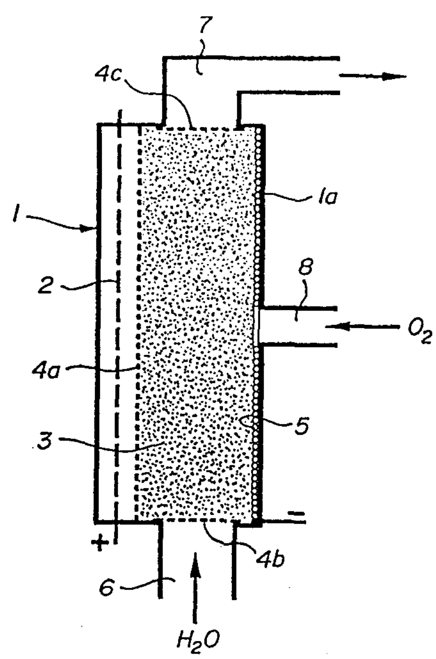


EP 0 141 780 A1

0141780

# PROCEDE POUR LA DECONTAMINATION ELECTROCHIMIQUE DE L'EAU

La présente invention a pour objet un procédé électrochimique de décontamination de l'eau polluée par des microorganismes nocifs et/ou des produits chimiques. Selon ce procédé, on fait passer l'eau à purifier dans une enceinte contenant des électrodes reliées à une source de courant, ces électrodes comprenant une anode en matière conductrice inerte placée dans une zone anodique de l'enceinte et une cathode en carbone ou graphite de structure poreuse librement perméable à l'eau dans une zone cathodique de ladite enceinte.

Il existe déjà, suivant l'état de la technique, de nombreux procédés électrochimiques ou électrolytiques de décontamination de l'eau.

Ainsi, dans le document US-A-3,766,034, on décrit un procédé pour éliminer de l'eau des impuretés ioniques telles que sulfate, phosphate et chlorures. Suivant ce procédé, on fait passer l'eau à purifier dans une cellule électrolytique comportant une anode et une cathode et contenant des particules métalliques (en plomb ou en aluminium) recouvertes par une pellicule de résine perméable aux ions. Ce document indique que, lors du passage du courant entre les électrodes, le métal des particules réagit avec les impuretés traversant la pellicule de résine revêtant celles-ci et forme des produits qui, insolubles dans l'eau, sont ainsi retenus dans la cellule.

Le document GB-A-1,497,134 décrit un procédé de stérilisation de l'eau par oxydation anodique selon lequel on fait circuler celle-ci dans une enceinte contenant une anode et une cathode alimentées par une source de courant. Cette enceinte contient encore située entre cette anode et cette cathode, une pluralité d'électrodes auxillaires en métal résistant à l'oxydation isolées électriquement les unes des autres aussi bien que de l'anode et de la cathode. L'efficacité d'un tel dispositif proviendrait de la très faible distance ménagée entre les électrodes pour le passage de l'eau. Ce document indique encore que, lors du fonctionnement du dispositif, il

peut être désirable d'empêcher que l'influence de l'hydrogène produit à la cathode vienne perturber l'effet d'oxydation par l'oxygène fourni à l'anode et que, pour ce faire, on peut recouvrir la cathode d'un revêtement poreux non conducteur.

Dans les documents FR-A-2,311,760 et US-A-4,072,596, on décrit un procédé de décontamination de l'eau par application d'un courant alternatif de fréquence 0,5 - 800 Hz. Le dispositif utilisé pour mettre ce procédé en oeuvre comprend une enceinte divisée en une succession de compartiments parcourus par l'eau à purifier. Ces compartiments, équipés d'électrodes reliées à une source de courant contiennent des lits de particules de natures diverses telles que catalyseurs en oxydes métalliques, (de préférence des catalyseurs d'oxydation), par exemple des oxydes d'étain, de plomb, d'antimoine, de bismuth, de chrome, de molybdène et autres. Ces catalyseurs peuvent être déposés sur une base porteuse telle que l'alumine. Les particules utilisables suivant cette référence comprennent encore des matières telles que le graphite, le carbone, les polymères synthétiques (nylon, polyuréthannes), céramiques, perlite, etc.. Les particules de carbone ou de graphite sont mentionnées comme destinées, en raison de leur conductibilité, à augmenter l'efficacité de l'oxydation en contribuant à former des "minicellules" et également à faciliter l'enlèvement des impuretés par adsorption. Pour améliorer son efficacité, ce dispositif est pourvu de moyens de refroidissement.

Le document FR-A-2,244,842 décrit un dispositif pour traiter électrochimiquement des eaux résiduaires. Ce dispositif comprend une cuve comprenant des électrodes planes en matériau conducteur perforé et un lit fluidisé de particules non conductrices. Il est utilisé principalement pour éliminer des métaux dissous dans les eaux industrielles, par exemple le cuivre.

Les documents FR-2,318,115 et US-A-4,048,030 décrivent un dispositif assez similaire à celui du document précédent mais destiné plus particulièrement à l'épuration et à la stérilisation de l'eau. Il se compose essentiellement d'un récipient fermé ayant une entrée inférieure et une sortie supérieure pour l'eau et comporte, au moins, deux électrodes reliées respectivement à la borne positive et à la borne négative d'une source de courant électrique continu. Le récipient contient encore des particules libres dont la densité est supérieure à celle de l'eau traitée ainsi que des moyens qui retiennent les particules à l'intérieur du récipient. Ces particules sont agitées par le mouvement du courant d'eau traversant la cellule, de sorte qu'elles forment un lit tourbillonnaire; ces particules entourent les électrodes et leur mouvement permanent maintient ces dernières propres par voie mécanique. Lorsqu'on procède, dans un tel appareil, à l'électrolyse d'une eau contenant, par exemple 3 ppm d'ions chlorure, sans utiliser entre les électrodes une membrane d'électrodialyse, il ne se forme pas de chlore, mais il se produit seulement un dégagement d'oxygène à l'anode. Par contre, lorsqu'on utilise une telle membrane, la concentration des ions chlorure augmente à l'intérieur de la section d'anode délimitée par celle-ci jusqu'à être suffisante pour la formation de chlore libre. En l'absence d'ions chlorure, d'autres ions, par exemple de carbonate ou de sulfate présents dans l'eau, sont concentrés dans la section d'anode délimitée par la membrane et sont oxydés en formant des ions percarbonate ou persulfate, qui constituent également d'excellents agents d'oxydation. Tous les autres acides organiques contenus dans l'eau peuvent être oxydés de la même manière.

Les documents FR-A-2,215,399 et US-A-3,725,226 décrivent un procédé électrochimique en courant alternatif de décontamination de l'eau polluée par des agents pathogènes. Ils font également référence à une technique antérieure suivant laquelle on soumet un milieu aqueux contenant de tels germes à une tension insuffisante pour provoquer l'électrolyse de l'eau mais suffisante pour provoquer le transfert du courant entre l'anode et les agents pathogènes à détruire. Toutefois, toujours suivant ces documents, cette technique antérieure présentait un défaut important constitué par l'encrassement des électrodes entraînant la nécessité de les nettoyer périodiquement. En conséquence, les documents précités recommandent d'appliquer dans le cas de cette technique antérieure un courant alternatif plutôt que continu, la tension appliquée pendant la phase anodique étant inférieure à celle nécessaire à la production d'oxygène par électrolyse alors que, lors de la phase cathodique, elle est suffisante pour que de l'hydrogène soit formé et que ce gaz provoque, par son dégagement, le nettoyage de l'électrode.

Le document FR-A-2,316,196 divulgue un dispositif de purification des eaux résiduaires par oxydation anodique. Ce dispositif comprend une cathode et une anode et, mises en contact avec celle-ci par le déplacement du courant d'eau à purifier, une masse de particules conductrices qui sont ainsi chargées positivement et qui, de ce fait, contribuent à distribuer efficacement l'effet d'oxydation au sein du liquide à purifier.

Le document FR-A-2,288,060 concerne un procédé électrochimique pour la stérilisation de l'eau et sa purification, notamment de résidus d'agents organiques toxiques, au moyen d'impulsions (de l'ordre de 100 à 6000 V) capables de créer des décharges électriques entre les électrodes.

Le document US-A-4,048,044 décrit un dispositif de décontamination de l'eau par oxydation anodique. L'anode de ce dispositif est en argent et, outre le fait que de l'oxygène est engendré par électrolyse de l'eau à son contact, elle présente la propriété de se dissoudre anodiquement en libérant des ions argent dont la présence accroît encore le pouvoir bactéricide de l'oxygène dégagé.

Les techniques antérieures qui viennent d'être décrites, si intéressantes et variées soient-elles, ne sont pas dépourvue de certains inconvénients parmi lesquels on peut citer:

la complexité du dispositif et des moyens mis en oeuvre (voir par exemple le document FR-A-2,311,760) souvent disproportionnés avec les résultats. L'efficacité souvent médiocre et les besoins relativement élevés en énergie électrique par $m^3$ d'eau à traiter. L'étroitesse du champ d'application; en effet, certaines techniques s'appliquent plutôt à la décontamination par des germes pathogènes et négligent l'élimination des polluants chimiques ou des métaux lourds alors que, dans le cas d'autres procédés, c'est plutôt le contraire.

Il était donc désirable de disposer d'un procédé simple, efficace et de mise en oeuvre économique permettant d'éliminer de l'eau pratiquement tous les agents polluants (germes pathogènes, ions métalliques, produits chimiques, colorants et autres) avec consommation d'un minimum d'énergie.

Le procédé de la présente invention remplit de telles conditions. Il est caractérisé par le fait qu'à l'eau soumise au traitement et circulant dans la zone cathodique, on ajoute de l'oxygène, celui-ci

subissant une électroréduction cathodique au contact de la cathode, les produits d'électroréduction agissant alors comme agents dépolluants de l'eau et amplifiant ainsi l'effet de dépollution dû au champ électrique entre les électrodes.

L'oxygène ainsi ajouté à l'eau traversant la zone cathodique peut provenir d'une source extérieure et être directement injecté dans la zone cathodique, ou il peut être engendré, dans l'enceinte d'électrolyse même, par électrolyse de l'eau à l'anode. Dans ce dernier cas, le plus simple et économique au point de vue constructif et opérationnel, cet oxygène migre par diffusion de la zone anodique vers la zone cathodique.

Le dessin en annexe permettra de mieux comprendre l'invention.

La fig. 1 représente schématiquement en coupe une cellule de décontamination électrochimique de l'eau.

La fig. 2 représente graphiquement l'efficacité de désactivation des germes pathogènes de l'eau en fonction de la densité du courant d'électrolyse.

La cellule pour la décontamination électrochimique de l'eau représentée à la fig. 1 est constituée par une enceinte 1 contenant une anode 2 et une cathode 3. L'enceinte 1 se présente sous la forme d'une chambre dont l'épaisseur (prise dans le sens transversal) est sensiblement plus faible qu'au moins l'une de ses autres dimensions (longueur et largeur). Ainsi, la chambre 1 peut avoir la forme d'un cylindre (vu en coupe diamétrale à la fig. 1) dont le diamètre a une dimension valant plusieurs fois celle de sa hauteur, ou une forme parallélépipédique ou prismatique. Suivant la forme d'exécution de la fig. 1 où l'enceinte est cylindrique, l'anode 2 est constitué par un disque plane de matière conductrice inerte, par exemple une plaque ou grille de titane platiné, d'acier inoxydable ou de graphite.

L'anode est constitué par une masse cylindrique de faible hauteur par rapport à son diamètre (par exemple un rapport de 1/5 à 1/50) faite en graphite ou en carbone poreux. En tant que cathode en matière poreuse, on peut utiliser une mousse de carbone (à pores ouverts) obtenue par carbonisation à l'abri de l'air d'une résine synthétique expansée, un lit de particules de charbon absorbant tassées les unes contre les autres afin d'assurer leur mise sous courant et

retenues dans le compartiment de cathode par des grilles à mailles fines 4a, 4b et 4c en matières conductrices ou isolantes, ou des fibres (ou tissus de fibres) de carbone ou graphite empaquetées dans le compartiment cathodique.

L'anode 2 est reliée à un générateur de courant (non représenté) de même que la cathode 3, celle-ci, par l'intermédiaire d'une mèche de fibre de graphite 5 enroulée en spirale et logée entre cette cathode et la paroi circulaire correspondante 1a de la cellule.

Celle-ci comprend encore une amenée 6 et une sortie 7 d'eau ainsi qu'une entrée 8 pour de l'air ou de l'oxygène sous pression.

Lors de la mise en fonctionnement de la présente cellule, on fait traverser celle-ci par le courant d'eau à décontaminer lequel parvient à la cellule par l'amenée 6 et ressort après dépollution, par la sortie 7. Durant son parcours dans l'enceinte 1, l'eau est en contact avec la cathode poreuse 3. Lors du passage du courant dans l'électrolyte, il se forme de l'oxygène à l'anode, ce gaz migrant, par simple diffusion et/ou en raison des mouvements de l'eau dans la cellule, vers la cathode au contact de laquelle on pense qu'il se réduit, de préférence suivant le schéma:

(1) $O_2 + H_2O + 2e \longrightarrow HO_2^- + OH^-$

Le produit d'électroréduction $HO_2^-$ est un agent décontaminant très actif quoique très instable et de vie éphémère. En effet, il peut se décomposer en fournissant de l'oxygène actif suivant:

(2) $HO_2^- \longrightarrow OH^- + \frac{1}{2}O_2$

ou il peut être réduit ultérieurement comme suit:

(3) $HO_2^- + 2e + H_2O \longrightarrow 3OH^-$

Cette réaction (3), indésirable, semble de poids négligeable dans la présente cellule, la majorité du $HO_2^-$ contribuant apparemment (par soi-même ou par l'intermédiaire de l'oxygène actif qu'il engendre) à la destruction des germes pathogènes de l'eau à décontaminer. On peut encore suppléer à l'oxygène fourni par l'anode en introduisant

ce gaz (ou de l'air), provenant d'une source extérieure, par l'ouverture 8. Cependant, dans de nombreux cas, une telle adjonction n'est pas nécessaire quoique, si le degré de pollution est très élevé, il est particulièrement avantageux d'introduire de l'oxygène en provenance d'une source extérieure (par barbotage ou par alimentation à travers l'électrode poreuse).

Par ailleurs, la cathode de carbone ou graphite poreux agit, lors de la décontamination de l'eau, comme site d'électroréduction d'impuretés réductibles éventuellement présentes et comme matière d'adsorption. Comme impuretés électroréductibles, on peut citer certains métaux lourds comme le plomb, le cuivre, le mercure, le nickel, le fer et autres qui sont réduits sous forme élémentaire à la cathode et restent absorbés dans ses pores. De même, les impuretés organiques peuvent être, soit électroréduites et précipitées cathodiquement, soit être oxydées par l'ion $HO_2^-$ cité précédemment et être adsorbées; parmi de telles impuretés, on peut citer des phénols, des pesticides, des détergents, des surfactifs, des pigments et des solvants.

La cellule de l'invention peut donc être utilisée avec succès pour obtenir de l'eau de consommation décontaminée et dépolluée sur une petite ou une grande échelle suivant la dimension de la cellule (ou le nombre de celles-ci placées en parallèle ou en séries).

A titre purement indicatif, on mentionnera qu'avec une cellule conforme à la forme représentée au dessin, présentant des électrodes d'un diamètre d'environ 20 cm (la cathode poreuse ayant 12 mm d'épaisseur et contenant 180 - 200 g de charbon actif granulaire dont les grains avaient 1-1,5 mm), on a pu dépolluer efficacement des eaux de rivière circulant avec un débit allant jusqu'à 2 l/min.

En ce qui concerne la régénération de la présente cellule, après une période de fonctionnement et lorsque son efficacité diminue, il suffit de l'isoler, par un jeu de by-pass, du circuit d'eau à décontaminer et d'y faire circuler en circuit fermé une faible quantité d'eau tout en inversant la polarité du courant aux électrodes. Lors de cette inversion, les polluants adsorbés sur la cathode sont désorbés ou dissous anodiquement et passent dans l'eau de lavage; celle-ci contenant les polluants en forte concentration peut être traitée séparément pour éliminer ceux-ci.

On notera encore que la présente cellule donne des résultats optimum en ce qui concerne son efficacité de dépollution lorsqu'elle travaille en régime continu sans inversion périodique de polarité ou, à plus forte raison, sans utilisation de courant alternatif. C'est là un des avantages inattendus de l'invention car, en régime alternatif, les impuretés désactivées sont partiellement régulièrement désorbées dans l'eau traitée alors qu'en continu, elles restent fixées sur la cathode. Ce n'est que pendant la période de régénération que les impuretés désactivées ou précipitées sur la cathode sont désorbées sous l'influence de l'inversion de courant et rejetées dans les eaux de lavage.

Les exemples qui suivent illustrent l'invention.

Exemple 1

On a utilisé une cellule comprenant des électrodes en forme de disque de diamètre 25 cm; distance anode cathode 2 cm. On a utilisé une eau polluée artificiellement par 16 x $10^4$ germes/l (Escherichia Coli) et on a fait circuler cette eau dans la cellule suivant des débits variables, sous un courant de 0,2 $A/dm^2$ et en régime continu et alternatif. Les mesures du degré de contamination après passage dans la cellule ont été effectuée par la méthode dite de filtration sur membrane (membrane "Millipore" 0,42 $\mu m$). Après filtration de l'échantillon d'eau à déterminer, les membranes sont incubées 48 h à 37° en boîtes de PETRI sur milieu nutritif "ENDO". Puis on détermine le degré de contamination résiduelle par comptage des colonies qui se sont développées suivant les moyens habituels. Les paramètres opératoires et les résultats sont rassemblées au Tableau I.

TABLEAU I

| Régime du courant (Hz) | Débit (l/min) | Contamination résiduelle (nb. de germes) |
|---|---|---|
| Continu (0) | 1,2 | >1000 |
| " | 0,6 | >1000 |
| " | 0,3 | 1000 |
| " | 0,2 | 120 - 140 |

| | | | |
|---|---|---|---|
| " | | 0,14 | 0 |
| " | | 0,1 | 0 |
| Alternatif | (50) | 0,1 | > 1000 |
| " | (10) | 0,1 | > 1000 |
| " | (1) | 0,1 | > 1000 |
| " | (0,5) | 0,1 | > 1000 |

On voit de par les résultats ci-dessus que pour des temps de séjour dans la cellule identiques (de 1 min par exemple pour 100 ml), l'eau traitée en régime continu était dépolluée alors qu'en régime alternatif (même de très basse fréquence) elle ne l'était pas.

Exemple 2

On a utilisé une cellule identique à celle de l'Exemple 1 et on a fait circuler dans celle-ci des échantillons d'eau polluée par des quantités variées de microorganismes, le traitement se faisant en courant continu sous diverses densités de courant.

Les données et les résultats figurent au Tableau II.

TABLEAU II

| Densité de courant (A/dm$^2$) | Débit (l/min) | contamination (nb. de germes/1x10$^4$) | |
|---|---|---|---|
| | | avant traitement | après traitement |
| 0,01 | 0,02 | 18 | 1 |
| 0,1 | 0,02 | 18 | 0 |
| 0,2 | 0,1 | 18 | 0 |
| 0,4 | 0,1 | 18 | 0 |
| 0,4 | 0,1 | 1800 | 0 |

D'après les résultats ci-dessus, on voit que pour des débits de l'ordre de 100 ml/min, des densités de courant de l'ordre de 0,2 à 0,4 A/dm$^2$ suffisent pour dépolluer une eau fortement contaminée par des germes pathogènes (jusqu'à 18 x 10$^6$/l).

Exemple 3

On a utilisé une cellule cylindrique contenant des électrodes d'environ 18 cm de diamètre (surface globale 3 dm$^3$). La cathode était

formée d'un lit de particules de charbon actif (EPIBON 1343/16, LURGI) d'une épaisseur de 12 mm retenues dans le compartiment cathodique par une grille de nylon. L'anode était en titane platiné. Distance entre les électrodes 20 mm; pression d'air par le conduit 8: 200 ml/min.

On a fait circuler, dans cette cellule, de l'eau de rivière fortement polluée par des germes pathogènes ainsi que par des produits chimiques (DCO = 850 - 950 mg/l).

On a fait circuler cette eau contenant différentes concentrations de microorganismes dans la cellule à différents régimes de débit et sous différentes densités de courant.

Les données et résultats figurent au Tableau III.

TABLEAU III

| Densité de courant ($A/dm^2$) | Débit (l/min) | Contamination (nb. de germes/l) | |
|---|---|---|---|
| | | Avant traitement $\times 10^6$ | Après traitement |
| 0,3 | 0,1 | 30 | 0 |
| " | 0,25 | " | 0-1 |
| " | 0,5 | " | 3-4 |
| " | 0,25 | 300 | 1-2 |
| " | 0,5 | " | 10-70 |
| 1 | 0,1 | 60 | 0 |
| " | 0,25 | " | 0 |
| " | 0,5 | " | 1-2 |
| " | 0,25 | 300 | 0 |
| " | 0,5 | " | 0 |
| " | 1 | " | 40-120 |
| 1,36 | 1 | 30 | 0-1 |
| " | 0,1 | 300 | 0-1 |
| " | 0,5 | " | 15-25 |
| " | 1 | " | 500 |

Les résultats qui précèdent indiquent qu'il n'est pas avantageux d'opérer sur des densités de courant dépassant 1 $A/dm^2$ pour des

 

débits allant jusqu'à environ 0,5 l/min.

Par ailleurs, lors des essais de cet Exemple, on a constaté une diminution très sensible de la pollution par les produits chimiques, ce qu'on a constaté par une valeur en DCO après traitement de l'ordre de 40 mg/l.

On a également fait travailler cette cellule dans des conditions similaires mais sans air additionnel ajouté par l'ouverture 8 qui, dans ce cas, était obturée. On a obtenu ainsi des résultats de très peu inférieurs, en ce qui concerne la dépollution, aux résultats figurant ci-dessus.

Exemple 4

Dans une cellule semblable à celle de l'Exemple 3, on a fait circuler de l'eau de rivière contenant 6 x $10^6$ germes/l à un débit de 2 l/min sous diverses densités de courant.

Les résultats sont présentés au graphique de la fig. 2 en tant que nombre de germes résiduels après dépollution (axe des ordonnées). On constate d'après ces résultats que pour des débits élevés, on a avantage à opérer sous des densités de courant dépassant 2 A/$dm^2$. Cependant, pour une dépollution maximum (nombre de germes pratiquement zéro), on a avantage à travailler avec des débits plus faibles et des densités de courant de l'ordre de 0,5 à 1 A/$dm^2$.

On notera encore que la tension nécessaire à l'obtention des densités de courant précitées est variable dans d'assez larges mesures en fonction de la conductibilité ionique des eaux à dépolluer. De manière générale, elle oscille entre quelques volts et une vingtaine de volts. De ce fait, les consommations de courant nécessaire pour décontaminer des eaux moyennement polluées sont de l'ordre de 1 à 2,5 Kwh/$m^3$.

Par ailleurs, le présent procédé présente une tendance à abaisser très légèrement le pH de l'eau à traiter, cet abaissement, qui dépend bien entendu des débits et des densités de courant, étant de l'ordre de 1 à 1,5 unités pH (par exemple pH 8,2 à 6,8 pour un débit de 0,25 l/min sous 1 A/$dm^2$ et 8,2 à 7,3 pour un débit de 2 l/min).

L'eau traitée peut contenir, après sortie de la cellule, un certain pouvoir bactéricide résiduel qu'on peut exprimer par son pouvoir oxydant équivalent à 1-2 ppm de $H_2O_2$. Le degré réel de ce pouvoir bactéricide n'a cependant pas été mesuré.

## REVENDICATIONS

1. Procédé pour la décontamination de l'eau polluée suivant lequel on fait passer celle-ci dans une enceinte contenant une anode en matière inerte et une cathode en carbone ou graphite de structure poreuse, librement perméable à l'eau, ces électrodes étant alimentées par une source de courant électrique, caractérisé par le fait qu'on ajoute de l'oxygène à l'eau en traitement, celui-ci étant électroréduit au contact de ladite cathode et les produits d'électroréduction agissant comme dépolluants de l'eau par désactivation ou dénaturation des germes pathogènes.

2. Procédé suivant la revendication 1, caractérisé par le fait que l'oxygène est engendré par oxydation électrolytique de l'eau à l'anode.

3. Procédé suivant la revendication 1, caractérisé par le fait que les impuretés de l'eau telles que les polluants chimiques sont également éliminées grâce à l'action électroréductrice de la cathode.

4. Procédé suivant la revendication 3, caractérisé par le fait que les impuretés se fixent sur la cathode par dépôt cathodique et/ou par adsorption.

5. Procédé suivant la revendication 1, caractérisé par le fait qu'on opère en courant continu.

6. Procédé suivant la revendication 1, caractérisé par le fait qu'on opère avec des densités de courant de 0,5 à 2 $A/dm^2$.

7. Procédé pour régénérer les électrodes utilisées dans le procédé selon la revendication 1, caractérisé par le fait qu'on inverse le sens du courant appliqué sur celles-ci.

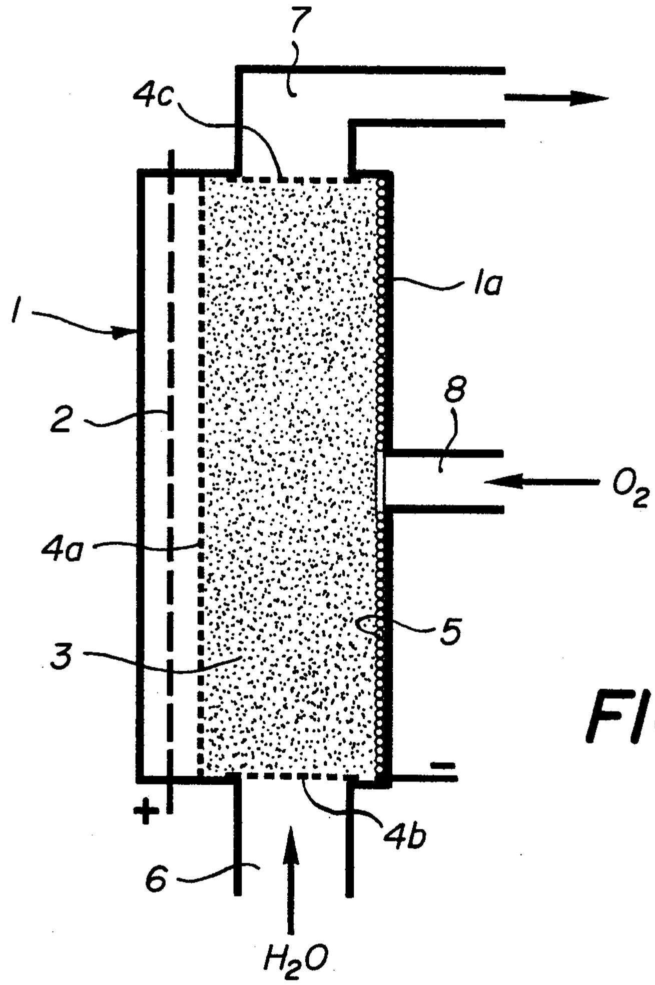


FIG. 1

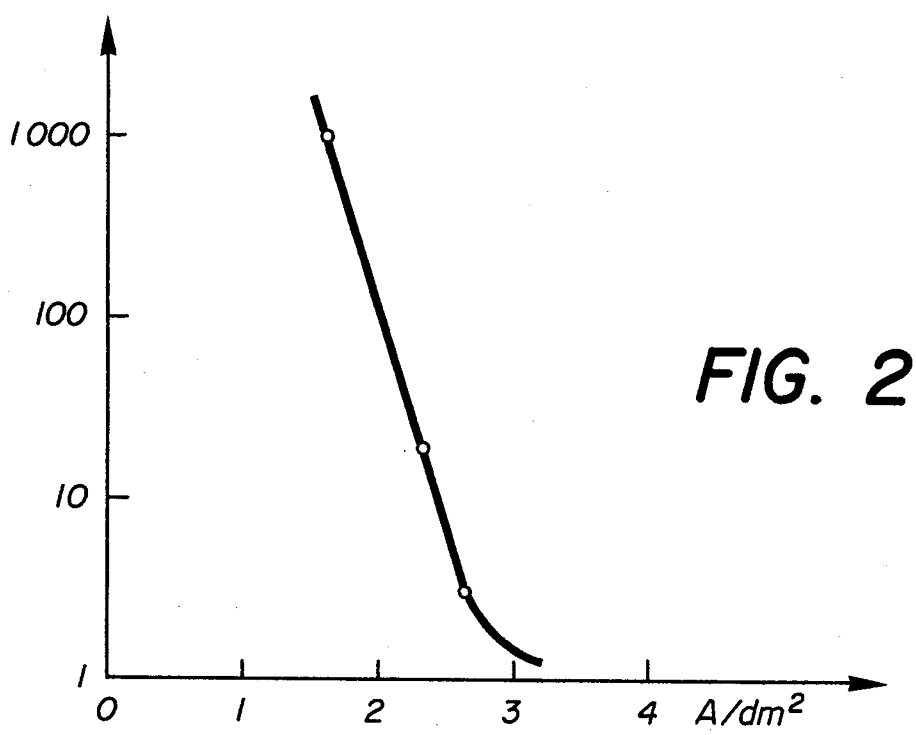


FIG. 2

Office européen des brevets

**RAPPORT DE RECHERCHE EUROPEENNE**

0141780
Numéro de la demande

EP 84 81 0487

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-3 793 173 (M. KAWAHATA et al.) * En entier * | 1-7 | C 02 F 1/46 |
| X | DE-C- 146 997 (H. KOSCHMIEDER) * En entier * | 1-7 | |
| A | DE-C- 338 280 (E.O. SCHEIDT) * En entier * | 1-7 | |
| A | GB-A-2 011 472 (UNION CARBIDE) * Abrégé; page 3, lignes 24-40 * | 1-7 | |
| A | DE-C- 414 652 (CHEMOTECHN. GES.) * En entier * | 1 | |
| | | | DOMAINES TECHNIQUES RECHERCHES (Int. Cl.4) |
| | | | C 02 F |

Le présent rapport de recherche a été établi pour toutes les revendications

| Lieu de la recherche | Date d'achèvement de la recherche | Examinateur |
|---|---|---|
| LA HAYE | 07-02-1985 | VAN AKOLEYEN H.T.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03 82